# EUROPEAN PATENT SPECIFICATION

(11) **EP 4 347 329 B1**
(45) Date of publication and mention of the grant of the patent: **16.04.2025**
(21) Application number: 21731116.6
(22) Date of filing: 04.06.2021
(51) Int. Cl.: B60T 1/10, B60L 7/10, B60W 20/14, B60W 30/18, F16D 61/00, B60H 1/14, B60L 7/22

(54) **AN ENERGY MANAGEMENT SYSTEM, A FUEL CELL SYSTEM, A VEHICLE AND A METHOD OF CONTROLLING AN ENERGY MANAGEMENT SYSTEM**
EIN ENERGIEMANAGEMENTSYSTEM, EIN BRENNSTOFFZELLENSYSTEM, EIN FAHRZEUG UND EIN VERFAHREN ZUR STEUERUNG EINES ENERGIEMANAGEMENTSYSTEMS
SYSTÈME DE GESTION D'ÉNERGIE, SYSTÈME DE PILE À COMBUSTIBLE, VÉHICULE ET PROCÉDÉ DE COMMANDE D'UN SYSTÈME DE GESTION D'ÉNERGIE

(43) Date of publication of application: 10.04.2024
(73) Proprietor: VOLVO TRUCK CORPORATION, 405 08 Göteborg (SE)
(72) Inventor: RAHM, Fredrik, 242 96 HÖRBY (SE); AUDHAV, Tove, 438 34 LANDVETTER (SE); LARSSON, Fredrik, 235 94 VELLINGE (SE)
(74) Representative: Kransell & Wennborg KB
(86) International application number: PCT/EP2021/065016
(87) International publication number: WO 2022/253445

(56) References cited:
- EP-A1- 2 394 837
- WO-A1-94/21481
- DE-A1- 102019 130 815
- GB-A- 2 572 583
- US-A1- 2008 174 174
- US-A1- 2013 173 107
- US-A1- 2019 291 665

## Description

### TECHNICAL FIELD

The present invention relates to an energy management system. The present invention also relates to a fuel cell system comprising such an energy management system, a vehicle comprising such an energy management system, and a method of controlling an energy management system. Although the invention will mainly be directed to a vehicle in the form of a truck using a fuel cell for generating electric power to an electric traction motor, the invention may also be applicable for other types of applications in which an energy management system can be implemented, such as e.g. industrial usage at which there is a desire to dissipate electrical energy, power plants, applications for mobile or stand-alone heating, etc.

### BACKGROUND

Energy systems are continuously developed to be able to provide sufficient amount of energy for e.g. obtaining desirable heating, etc. The heating requirements are applicable for a wide variety of installations, such as in buildings, process factories, vehicles, etc.

With particular reference to the field of vehicles, the propulsion systems are continuously developed to meet the demands from the market. A particular aspect relates to the emission of environmentally harmful exhaust gas. Therefore, vehicles propelled by electric machines and/or electric machine receiving electric power from hydrogen fuel cells have been increasingly popular, in particular for trucks and other heavy duty vehicles.

In comparison to a vehicle propelled solely by an internal combustion engine (ICE), a vehicle propelled by an electric machine conventionally struggles with the problem of handling electric power when the vehicle battery is fully charged, or how to provide sufficient heating of components, on a vehicle or outside a vehicle, during operation, since these types of vehicle lacks the heat generating ICE for handling excess energy and supply of heating. As a further example, the auxiliary braking functionality of a vehicle propelled by an electric machine can be a dimensioning factor for the cooling system since the cooling capacity of e.g. a fuel cell electric vehicle (FCEV) as well as a battery electric vehicle (BEV) is a limiting factor.

There is thus a desire to improve the energy systems to be able to provide sufficient and desirable heating as well as being able, in a vehicle application, to handle electric power which cannot be delivered to the vehicle battery, or other non-vehicle related components.

According to its abstract, GB 2 572 583 A relates to, upon receiving a signal to decelerate a vehicle, a braking process selection system that selects at least one of a first braking process or a second braking process for the vehicle based upon one or more vehicle operating parameters, e.g. the state of charge (SOC) of an energy storage device in the vehicle and a deceleration amount required. The first braking process increases the SOC of the energy storage device (e.g. operating an integrated starter-generator (ISG) in generator mode). The second braking process increases pumping losses of an engine of the vehicle. The second braking process may additionally use friction brakes. Engine pumping losses may be increased using one or more strategies, e.g. exhaust gas recirculation (EGR), continuously variable valve lift (CVVL, VVL), wastegate (WG), variable geometry turbocharger (VGT), throttle valve, increasing engine friction (using one or more auxiliary loads (e.g. oil pump, vacuum pump, water pump, A/C compressor)). The first braking process may be selected if the SOC of the energy storage device is below a threshold SOC. The second braking process may be selected: if the SOC of the energy storage device is at, or above, a threshold SOC; or if a detected temperature is below a threshold value. If a required deceleration value is not met, both braking processes may be selected. Another state of the art power supply system, preventing overcharge, is shown in EP3294837 A1.

### SUMMARY

It is thus an object of the present invention to at least partially overcome the above described deficiencies.

According to a first aspect, there is provided an energy management system, comprising an electric machine electrically connected to an electric source, an air compressor arranged in an air flow channel of the energy management system, the air compressor being configured to receive and pressurize air, wherein the air compressor is mechanically connected to, and operable by, the electric machine, an air heating arrangement positioned in the air flow channel in fluid communication with the air compressor, wherein the air heating arrangement is arranged to heat air present in the air flow channel, and a flow injecting arrangement positioned downstream the air compressor in the air flow channel, wherein the flow injecting arrangement comprises a portion configured to admit a flow of fluid into the flow of air exhausted from the air compressor.

The wording "air heating arrangement" should be construed as a device or arrangement which is able to heat the air in the air flow channel. Detailed example embodiments of the air heating arrangement will be described below, and the air heating arrangement should be construed as being positioned in upstream fluid communication with the air compressor, downstream fluid communication with the air compressor, or upstream and downstream fluid communication with the air compressor. In the latter case, the air heating arrangement is constituted by two separately arranged air heating devices, which can be of different type.

Further, the flow injecting arrangement should be construed as a device which is able to either actively or passively admitting the flow of fluid into the flow of air downstream the air compressor. The flow of fluid could be either a gas, such as e.g. air, or a liquid, such as e.g. water. The flow injecting arrangement can thus comprise a pump or injector to supply the flow of fluid or, as will be described in further detail below, be arranged with an opening or orifice admitting the flow of fluid by means of a pressure difference between an inlet side and on exterior of the flow injecting arrangement, i.e. a pressure difference between the outer ends of the opening/orifice.

Moreover, the electric source should be construed as being, for example, a battery connected to the electric machine. The electric source could also be a fuel cell stack arranged to generate electric power, a capacitor, an inverter, or a generator, etc. arranged in connection with the electric machine. The electric source can also be formed by the electric power grid.

The inventors have unexpectedly realized that the present invention can deliver a large volume of hot air flow through the air flow channel, which heat generation is free from environmentally harmful emissions. The air compressor can thus be used for dissipating electric power from the electric source. An advantage is thus that the energy management system can generate heat, in the form of heated air flowing through the air flow channel, by operating the electric machine and the air compressor. In a situation where e.g. a battery has a SOC-level above a predetermined threshold limit, i.e. is full, and unable to receive electric power, the present invention can advantageously operate the electric machine and the air compressor to dissipate the excessive electric power and convert it to heated air.

The present invention is thus advantageously "burning off" electric energy for e.g. performing a braking operation of a vehicle or when a battery is full, whereby the electric energy gained during such an event is placed into a raised temperature of air in the air flow channel. As such, the present invention is particularly advantageous when e.g. a vehicle battery is full and a cooling system connected to the energy management system has reached its cooling limit, i.e. the cooling system is unable to provide any cooling. A further advantage is thus that the existing cooling system can be downsized.

The air compressor can thus receive the electric energy which is placed into an increased pressure of the air, as well as an increased temperature level of the air. Furthermore, the air compressor can provide air at a suitable high pressure level that can reduce the packaging size of other components of the system, such as the air heating arrangement. Also, heat transfer will be increased with higher pressure level and air flow velocity. In addition, the specific heat transfer coefficient will increase with an increased temperature level. An air compressor can also be provided as a relatively small component fulfilling the desires of creating sufficient increase in pressure and mass flows. An air compressor is also consuming a relatively high level of power when compressing the air, thus improving the energy dissipation. The air compressor may, in a vehicle application, be arranged as a brake compressor used for auxiliary braking.

Still further, by providing a flow injecting arrangement downstream the air compressor advantageously decrease temperature and increases the mass flow of the air flowing in the air flow channel. Also, and as will be described further below, using a flow injecting arrangement admitting a liquid into the air flow channel can increase the mass flow in the air flow channel.

According to an example embodiment, the air heating arrangement may comprise an electric air heating arrangement positioned downstream the air compressor in the air flow channel. According to an example embodiment, the electric air heating arrangement may be electrically connected to the electric source. Hereby, electric energy can be dissipated, and heat the air flow in the air flow channel.

According to an example embodiment, the electric air heating arrangement may be an electric resistor.

According to an example embodiment, the electric air heating arrangement may comprise an air heater positioned in upstream fluid communication with the air compressor in the air flow channel.

The inventors have also unexpectedly realized that by increasing the temperature of the air before it reaches the air compressor will enable the air compressor to supply and "burn off" an even further amount of electric energy from the electric source, thereby, for example, increasing the brake capacity in a vehicle application even further as the cooling system will be less strained during a braking event.

According to an example embodiment, the flow injecting arrangement may be positioned downstream the air heating arrangement in the air flow channel. The flow injecting arrangement can hereby be less sensitive to its position downstream the air compressor and can, for example, be connected to an external fluid tank using a hose, i.e. an increased mobility of the energy management system.

The flow injecting arrangement may as an alternative be positioned upstream the air heating arrangement in the air flow channel. An advantage of arranging the flow injecting arrangement upstream the air heating arrangement is that the temperature level in the air heating arrangement can be reduced. This position also adds mass flow in the air heating arrangement.

According to an example embodiment, the flow injecting arrangement may be connectable to fluid reservoir, wherein the admitted flow of fluid is received from the fluid reservoir. The fluid reservoir may, for example, be a fuel cell reservoir, a fluid tank or a gas tank, etc.

According to an example embodiment, the flow injecting arrangement may be a venturi arrangement comprising a constricted portion comprising an inlet configured to admit the flow of fluid into the flow of air exhausted from the air compressor. As will be described below, the venturi arrangement may be a gas venturi and/or a liquid flow venturi. A venturi advantageously increases the flow velocity of the air flow in the air flow channel. Also, due to the relatively high pressure being available by using the air compressor enables for the usage of a passive component such as the above described venturi arrangement.

According to an example embodiment, the venturi arrangement may comprise a gas venturi, such as an air venturi, wherein the inlet arranged in the constricted portion is configured to admit gas into the flow of air exhausted from the air compressor. The inlet may be an inlet towards the ambient environment, or an inlet connected to an gas tank for supply of gas into the constricted portion. The gas may thus be admitted into the constricted portion by means of the pressure difference within the constricted portion and outside the constricted portion.

According to an example embodiment, the venturi arrangement may comprise a liquid venturi, wherein the inlet arranged in the constricted portion is connectable to a fluid reservoir and configured to admit a flow of liquid fluid into the flow of air exhausted from the air compressor. Using a liquid venturi presents the advantage of providing a steam into the air flow channel, which steam has a higher specific heat which will increase the cooling capacity.

According to an example embodiment, the venturi arrangement may comprise the air venturi and the liquid venturi, the air venturi and the liquid venturi being arranged in series in the air flow channel By using a serial connection, the energy management system can choose to add either liquid or gas, depending on the operating condition, thus a more flexible solution.

According to an example embodiment, the energy management system may further comprise a venturi valve connected to the inlet of the constricted portion, the venturi valve being configured to controllably admit the flow of fluid into the flow of air exhausted from the air compressor. Hereby, the flow of fluid into the constricted portion can be controlled in any desired manner.

According to an example embodiment, the electric machine may be arranged in the air flow channel at a position upstream the air compressor. Hereby, the electric machine will in turn be cooled, thereby presenting a combined technical advantage. As an alternative, and according to an example embodiment, the air heating arrangement may be formed by a heat exchanger connected to a liquid cooling system. Also, an air fan or additional compressor can be positioned upstream the electric machine. Hence, air is received by the air fan or additional compressor before supplied to the electric machine. A pre-boosting of the air is generated which makes the potential power density for the electric machine more efficient, i.e. increased, whereby the above described air flow producing unit can also be downsized.

According to an example embodiment, the energy management system may further comprise a flow restriction arrangement in the air flow channel. Furthermore, and according to an example embodiment, the flow restriction arrangement may be positioned upstream the flow injecting arrangement. The flow restriction arrangement can hereby assist the energy management system to keep the air pressure level at a suitable pressure level for obtaining e.g. a desired braking effect.

According to an example embodiment, the flow restriction arrangement may be arranged in fluid communication between the electric air heating arrangement and the venturi arrangement. Also, and according to an example embodiment, the flow restriction arrangement may be one of a muffler or a valve.

A muffler may be advantageously incorporated in the energy management system to lower temperature and noise of the exhaust air. The muffler can function as a static flow restriction component or it can be arranged in series to an additional flow restriction component. The flow restriction arrangement and the muffler may be formed in a single component. Also, the air heating arrangement can be arranged within the muffler. Furthermore, the muffler may preferably comprise a temperature management arrangement for reducing the temperature level of the exhausted air to the ambient environment. Such temperature management arrangement may comprise a thermal insulation, a cooling circuitry, a heat exchanger, and/or a blend of low temperature air mixed with the relatively high temperature air received from the electrical brake resistor arrangement.

According to an example embodiment, the energy management system may further comprise a temperature sensor positioned in the air flow channel, and a control unit connected to the temperature sensor, wherein the control unit comprises control circuitry configured to receive, from the temperature sensor, a signal indicative of a temperature level of the air in the air flow channel, compare the temperature level with a predetermined threshold limit, and control components of the energy management system based on the temperature level. Hereby, an active control strategy is enabled for the energy management system whereby the components in the energy management system is controlled based on the current temperature.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

According to an example embodiment, the control unit may be connected to the electric machine, the control circuitry being configured to control the electric machine to reduce a rotational speed of the air compressor when the temperature level is above the predetermined threshold limit. Hereby, when there is less need of increasing the temperature, the air compressor speed is reduced.

According to an example embodiment, the control unit may be connected to the electric air heating arrangement, the control circuitry being configured to control the electric air heating arrangement to be arranged in an active state to receive electric power from the electric source when the temperature level is below the predetermined threshold limit. Thus, when there is a desired to dissipate electric power, the electric air heating arrangement is activated.

According to an example embodiment, the control unit may be connected to the venturi valve, the control circuitry being configured to control the venturi valve to be arranged in an open position to admit the flow of fluid into the flow of air exhausted from the air compressor when the temperature level is above the predetermined threshold limit. The venturi arrangement hereby reduces the temperature level when this is desirable.

According to a second aspect, there is provided a fuel cell system, comprising a fuel cell stack arrangement comprising an air inlet side for receiving air to the fuel cell stack arrangement via an air inlet conduit; and an energy management system according to any one of the embodiments described above in relation to the first aspect, wherein the air compressor is arranged in fluid communication with the air inlet conduit.

Effects and features of the second aspect are largely analogous to those described above in relation to the first aspect.

According to a third aspect, there is provided an electrically propelled vehicle, comprising an energy management system according to any one of the embodiments described above in relation to the first aspect.

Effects and features of the third aspect are largely analogous to those described above in relation to the first aspect.

According to a fourth aspect, there is provided a method of controlling an energy management system, the energy management system comprising an electric machine electrically connected to an electric source, an air compressor arranged in an air flow channel of the energy management system, the air compressor being configured to receive and pressurize air, wherein the air compressor is mechanically connected to, and operable by, the electric machine, an air heating arrangement positioned in the air flow channel, wherein the air heating arrangement is arranged to heat air present in the air flow channel, and a flow injecting arrangement positioned downstream the air compressor in the air flow channel, wherein the flow injecting arrangement comprises a portion comprising an inlet configured to admit, via a valve, a flow of fluid into the flow of air exhausted from the air compressor, wherein the method comprises determining a temperature level of the air in the air flow channel, comparing the temperature level with a predetermined threshold limit, and controlling at least one of the air compressor, the air hearting arrangement or the valve based on the temperature level. The predetermined threshold limit could, for example, be based on an operator command, a temperature level of one of the components in the energy management system, etc.

According to a fifth aspect, there is provided a computer readable medium carrying a computer program comprising program code means for performing the steps of the third aspect when the program means is run on a computer.

According to a sixth aspect, there is provided a computer program comprising program code means for performing the steps of the third aspect when the program is run on a computer.

Effects and features of the fourth, fifth and sixth aspects are largely analogous to those described above in relation to the first aspect.

Further features of, and advantages will become apparent when studying the appended claims and the following description. The skilled person will realize that different features may be combined to create embodiments other than those described in the following, without departing from the scope of the present disclosure.

### BRIEF DESCRIPTION OF THE DRAWINGS

The above, as well as additional objects, features, and advantages, will be better understood through the following illustrative and non-limiting detailed description of exemplary embodiments, wherein:
Fig. 1 is a lateral side view illustrating an example embodiment of a vehicle in the form of a truck;
Fig. 2 is a schematic illustration of an energy management system according to an example embodiment of the present invention;
Fig. 3 is a schematic illustration of an energy management system according to another example embodiment of the present invention;
Fig. 4 is a schematic illustration of an energy management system according to still another example embodiment of the present invention; and
Fig. 5 is a flow chart of a method of controlling an energy management system according to an example embodiment.

### DETAILED DESCRIPTION

The present invention will now be described more fully hereinafter with reference to the accompanying drawings, in which exemplary embodiments are shown. The invention may, however, be embodied in many different forms and should not be construed as limited to the embodiments set forth herein; rather, these embodiments are provided for thoroughness and completeness. Like reference character refer to like elements throughout the description.

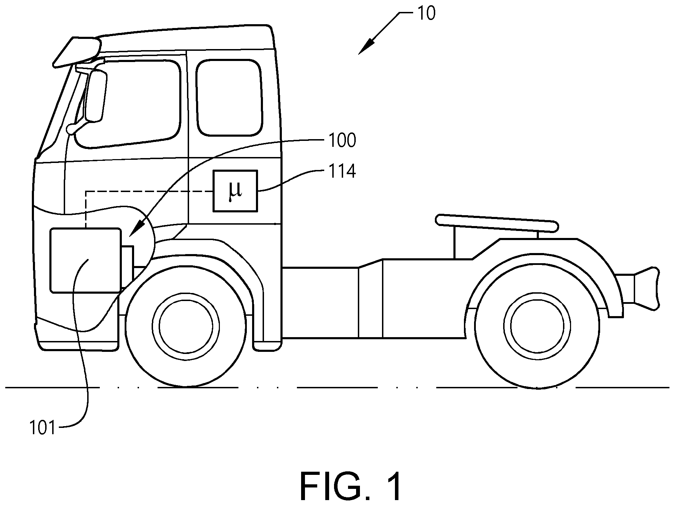

With particular reference to Fig. 1, there is depicted a vehicle 10 in the form of a truck. The vehicle comprises a traction motor 101 for propelling the wheels of the vehicle. The traction motor 101 is in the example embodiment an electric machine arranged to receive electric power from a battery or directly from a fuel cell system. The vehicle 10 also comprises a control unit 114 for controlling various operations as will also be described in further detail below, and an energy management system 100 (not shown in detail in Fig. 1) arranged to dissipate electric energy during operation of the vehicle. The energy management system may be particularly advantageously operated as an auxiliary braking system for the vehicle 10.

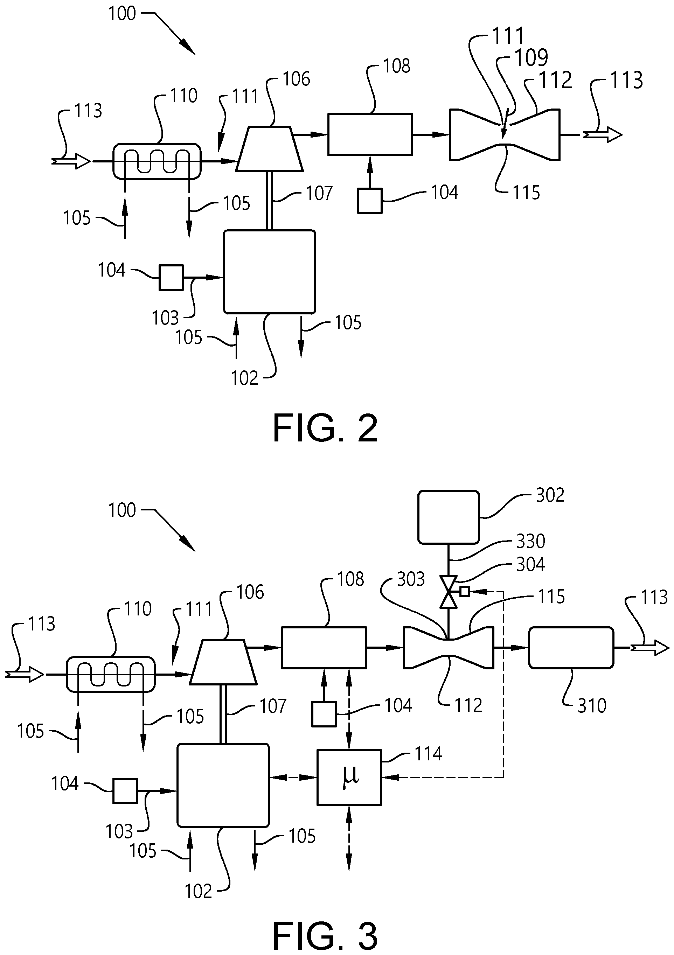

In order to describe the energy management system in further detail, reference is made to Fig. 2 which is a schematic illustration of an energy management system 100 according to an example embodiment. The energy management system 100 depicted in Fig. 2 comprises an electric machine 102 arranged to receive electric power 103 from an electric source 104. The electric source 104 can be, for example, a vehicle battery or a fuel cell system. The electric source 104 can, as another option, be formed by an electric inverter, or other electric machine, etc. Thus, the purpose of the electric source is to supply electric power to the electric machine. The electric source can, according to an example, also be arranged to receive electric power from the traction motor 101 of the vehicle. Moreover, the electric machine 102 can also be connected to a cooling system 105 of the vehicle 10. The cooling system 105 may either be a liquid cooling system or an air cooling system.

The energy management system 100 further comprises an air compressor 106 mechanically connected to, and operated by, the electric machine 102. Preferably, the air compressor 106 is mechanically connected to the electric machine 102 by a shaft 107. The air compressor 106 serves, amongst other things, the purpose of pressurizing and supplying a flow of air 113 in an air flow channel 111 of which the air compressor 106 is arranged. The air compressor 106 is thus preferably arranged to significantly increase the pressure level of the air, as well as to increase the temperature level and flow velocity of the air. According to an example, the air compressor 106 can be arranged as a brake compressor 106 when the energy management system 100 is incorporated in the vehicle depicted in Fig. 1.

The air compressor 106 is, as indicated above, arranged in the air flow channel 111 of the energy management system 100. The energy management system 100 further comprises an air heating arrangement 108, 110. In Fig. 2, and throughout the following description, the air heating arrangement 108, 110 is illustrated and described an electric air heating arrangement 108 and a heat exchanger 110. It should however be readily understood that the energy management system 100 may comprise only one of the electric air heating arrangement 108 and the heat exchanger 110. Thus, one of the electric air heating arrangement 108 and the heat exchanger 110 can be omitted in the energy management system 100 but are both illustrated for simplifying the description of the present invention.

The electric air heating arrangement 108 may be arranged in the air flow channel 111 at a position downstream the air compressor 106, i.e. to receive pressurized air from the air compressor 106. The electric air heating arrangement 108 is connected to the electric source 104. In Fig. 2, the electric source 104 is depicted as two components for simplicity of understanding. It should be readily understood that the electric source could be either a single component or separate components.

The electric air heating arrangement 108 is preferably implemented in the form of an electric brake resistor arrangement comprising an electric brake resistor. The electric air heating arrangement 108 thus receives the pressurized air from the air compressor 106, whereby the air is heated by in the electric air heating arrangement by the electric power received from the electric source 104. The air is thereafter preferably supplied towards the ambient environment.

According to an example embodiment, the electric air heating arrangement may be an air cooled electric air heating arrangement, such as an air cooled electrical brake resistor. The electric air heating arrangement is thus cooled by the air it receives from the air flow producing unit when receiving electric power. Other alternatives are also conceivable.

Further, the heat exchanger 110 is arranged in upstream fluid communication with the air compressor 106. The heat exchanger 110 is in Fig. 2 arranged by as a heat exchanger connected to the cooling system 105 of the vehicle 10. Thus, the heat exchanger receives liquid fluid from the cooling system 105 and pre-heats the air before it is delivered to the air compressor 106. The heat exchanger 110 is thus preferably an air-to-liquid heat exchanger but may, as an alternative, be an air-to-air heat exchanger which uses relatively warm air to heat the air that is supplied to the brake compressor 106. As an alternative, the heat exchanger 110 may be replaced by the electric machine 102. In such a case, the electric machine receives the air, and pre-heats the air before the air is supplied to the air compressor 106.

Furthermore, the energy management system 100 comprises a flow injecting arrangement 112 positioned in the air flow channel 111. The flow injecting arrangement 112 is arranged in downstream fluid communication with the air compressor 106, i.e. the flow injecting arrangement 112 receives the pressurized air exhausted from the air compressor 106. Although not depicted in detail in Fig. 2, the flow injecting arrangement 112 comprises a portion configured to admit a flow of fluid into the flow of air exhausted from the air compressor 106. As can be seen in Fig. 2, the flow injecting arrangement 112 is arranged in the form of a venturi arrangement comprising a constricted portion 115. The constricted portion 115 is arranged as a reduced diameter of the venturi arrangement in which the flow velocity of the flow of air from the air compressor 106 will increase. The portion configured to admit the flow of fluid into the venturi arrangement is preferably arranged at the constricted portion 115 of the venturi arrangement. As can be seen in Fig. 2, the portion is arranged as an orifice 112 in which a flow of fluid 109 can enter the constricted portion 115. Preferably, and according to the example embodiment depicted in Fig. 2, the venturi arrangement 112 is arranged in downstream fluid communication with the electric air heating arrangement 108.

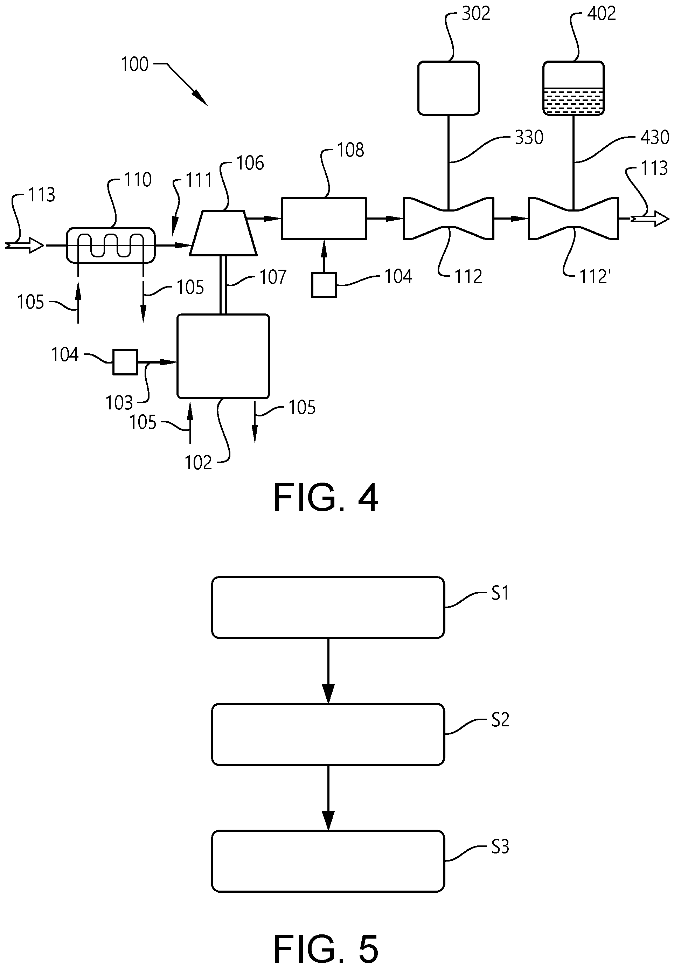

As will be evident from the below description in relation to Figs. 3 and 4, the venturi arrangement may comprise a gas venturi, a liquid venturi, or a combination of a gas venturi and a liquid venturi connected in series with each other in the air flow channel 111.

Turning now to Fig. 3, which is a schematic illustration of the energy management system 100 according to another example embodiment of the present invention. The energy management system 100 in Figs. 2 and 3 are similar in many ways and the following will only describe the differences and additional components of Fig. 3 in relation to the embodiment of Fig. 2.

In Fig. 3, the venturi arrangement 112 is depicted as the above described gas venturi. The Fig. 3 embodiment will of course function equally as well by instead using the above described liquid venturi. The energy management system 100 in Fig. 3 comprises a venturi valve 304 connected to an inlet 303 of the constricted portion 115. The venturi valve 304 is in turn connected to an air tank 302. The venturi valve 304 is thus arranged in a venturi conduit 330 arranged between the air tank 302 and the inlet 303 of the constricted portion 115. The venturi conduit 330 may preferably comprise a filter for avoiding particles to the enter the air flow channel 111.

According to a conceivable alternative not depicted in the figures, the gas venturi can be replaced by a pump connected to a gas tank, or gas reservoir. Hence, the flow injecting arrangement is arranged in the form of a pump, which is controlled to pump the flow of gas into the air flow channel. The pump can, for example, be arranged as a feeding pump, which does not increase the pressure of the gas but merely feeds gas into the air flow channel. The pump may also be connected to a nozzle, which nozzle admits the flow of fluid into the air flow channel.

Fig. 3 further depicts the control unit 114 in further detail. The control unit 114 is of course also applicable for the embodiment depicted in Fig. 2 and described above. The control unit 114 is also applicable for the embodiment that will be described below with reference to Fig. 4.

The control unit 114 preferably comprises processing circuitry including a microprocessor, microcontroller, programmable digital signal processor or another programmable device. The processing circuitry may also, or instead, include an application specific integrated circuit, a programmable gate array or programmable array logic, a programmable logic device, or a digital signal processor. Where the processing circuitry includes a programmable device such as the microprocessor, microcontroller or programmable digital signal processor mentioned above, the processor may further include computer executable code that controls operation of the programmable device. It should be understood that all or some parts of the functionality provided by means of the processing circuitry may be at least partly integrated with a e.g. a primary vehicle control unit, or other control units of the vehicle, which is/are arranged to detect an upcoming traffic situation, road topology, etc. The information from the primary vehicle control unit can thus be transmitted to the above described control unit 114 for decision making of the control unit 114.

As can be seen in Fig. 3, the control unit 114 is connected to the electric machine 102, the electric air heating arrangement 108, and the venturi valve 304. The control unit 114 is thus configured to receive control signals from each of these components and control the operation of these components.

As is further depicted in Fig. 3, the energy management system 100 further comprises a flow restriction arrangement 310 in the air flow channel 111. The flow restriction arrangement 310 is preferably configured to adjust the flow velocity of the pressurized flow in the air flow channel 111, to reach the desired back pressure in the air compressor. Preferably, the flow velocity can be increased when directed through the flow restriction arrangement 310. Although flow restriction arrangement 310 is depicted as positioned downstream the air heating arrangement, the flow restriction arrangement 310 can also be arranged upstream the air heating arrangement. The flow restriction arrangement 310 is one of a muffler or a valve. In the example embodiment of Fig. 3, the flow restriction arrangement 310 is arranged in downstream fluid communication with the venturi arrangement 112. It should however be readily understood that the flow restriction arrangement 310 can be arranged in upstream fluid communication with the venturi arrangement 112 as well.

Turning now to Fig. 4 which is a schematic illustration of the energy management system 100 according to still another example embodiment of the present invention. In Fig. 4, the venturi arrangement comprises a gas venturi 112 as well as a liquid venturi 112'. The gas venturi 112 and the liquid venturi 112' are connected in series with each other in the air flow channel 111. Hereby, air is supplied into the gas venturi 112 and liquid fluid, i.e. water, is supplied into the liquid venturi 112'.

The gas venturi 112 is depicted as connected to the above described air tank 302 via the venturi conduit 330. The gas venturi 112 may however be arranged with a simple opening or orifice to the ambient environment as described above. Also, the venturi valve described above in relation to Fig. 3 may of course also be implemented in the venturi conduit 330 of Fig. 4.

The liquid venturi 112' is connected to a fluid reservoir 402 via a fluid conduit 430. The fluid conduit 430 may, as an alternative, comprise a fluid valve (not shown) to controllably supply a flow of liquid fluid into the liquid conduit 112'. The fluid reservoir 402 may be a water tank, or a fuel cell water tank when the energy management system 100 is arranged in a vehicle comprising a fuel cell system.

In Fig. 4, the liquid venturi 112' is arranged downstream the gas venturi 112. However, the liquid venturi 112' may equally as well be arranged upstream the gas venturi 112.

According to a conceivable alternative not depicted in the figures, the liquid venturi can be replaced by a liquid pump connected to a liquid tank, or reservoir. Hence, the flow injecting arrangement is arranged in the form of a liquid pump, which is controlled to pump the flow of liquid fluid into the air flow channel. The liquid pump can, for example, be arranged as a feeding pump, which does not increase the pressure of the liquid fluid but merely feeds liquid fluid into the air flow channel. The pump may also be connected to a nozzle, which nozzle admits the flow of fluid into the air flow channel.

In order to describe the operation of the energy management system 100 depicted in Figs. 2 - 4, reference is made to Fig. 5. Fig. 5 is a flow chart of a method of controlling an energy management system according to an example embodiment. During operation, the control unit 114 receives a signal indicative of the temperature level of the air in the air flow channel 111. Thus, the temperature level of the air is determined S1. The control unit 114 compares S2 the temperature level with a predetermined threshold limit. Based on the temperature level, the control unit 114 controls S3 at least one of the air compressor 106, the air heating arrangement 108 or the venturi valve 304.

In particular, the control unit 114 is arranged to control the electric machine 102 to reduce a rotational speed of the air compressor 106 when the temperature level is above the predetermined threshold limit. Alternatively, or additionally, the control unit 114 can control the electric air heating arrangement 108 to be arranged in an active state to receive electric power from the electric source 104 when the temperature level is below the predetermined threshold limit. Alternatively, or additionally, the control unit 114 can control the venturi valve 304 to be arranged in an open position to admit the flow of fluid into the flow of air exhausted from the air compressor 106 when the temperature level is above the predetermined threshold limit.

It is to be understood that the present disclosure is not limited to the embodiments described above and illustrated in the drawings; rather, the skilled person will recognize that many changes and modifications may be made within the scope of the appended claims.

## Claims

1. An energy management system for a vehicle, comprising
- an electric machine electrically connected to an electric source,
- an air compressor arranged in an air flow channel of the energy management system, the air compressor being configured to receive and pressurize air, wherein the air compressor is mechanically connected to, and operable by, the electric machine,
- an air heating arrangement positioned in the air flow channel in fluid communication with the air compressor, wherein the air heating arrangement is arranged to heat air present in the air flow channel, and
- a flow injecting arrangement positioned downstream the air compressor in the air flow channel, wherein the flow injecting arrangement comprises a portion configured to admit a flow of fluid into the flow of air exhausted from the air compressor.

2. The energy management system according to claim 1, wherein the air heating arrangement comprises an electric air heating arrangement positioned downstream the air compressor in the air flow channel.

3. The energy management system according to claim 2, wherein the electric air heating arrangement is electrically connected to the electric source.

4. The energy management system according to any one of the preceding claims, wherein the electric air heating arrangement comprises an air heater positioned in upstream fluid communication with the air compressor in the air flow channel.

5. The energy management system according to any one of the preceding claims, wherein the flow injecting arrangement is positioned downstream the air heating arrangement in the air flow channel.

6. The energy management system according to any one of the preceding claims, wherein the flow injecting arrangement is a venturi arrangement comprising a constricted portion comprises an inlet configured to admit the flow of fluid into the flow of air exhausted from the air compressor.

7. The energy management system according to any one of the preceding claims, wherein the electric machine is arranged in the air flow channel at a position upstream the air compressor.

8. The energy management system according to any one of the preceding claims, wherein the energy management system further comprises a temperature sensor positioned in the air flow channel, and a control unit connected to the temperature sensor, wherein the control unit comprises control circuitry configured to:
- receive, from the temperature sensor, a signal indicative of a temperature level of the air in the air flow channel,
- compare the temperature level with a predetermined threshold limit, and
- control components of the energy management system based on the temperature level.

9. The energy management system according to claim 8, wherein the control unit is connected to the electric machine, the control circuitry being configured to:
- control the electric machine to reduce a rotational speed of the air compressor when the temperature level is above the predetermined threshold limit.

10. The energy management system according to claims 8 or 9, wherein the control unit is connected to the electric air heating arrangement, the control circuitry being configured to:
- control the electric air heating arrangement to be arranged in an active state to receive electric power from the electric source when the temperature level is below the predetermined threshold limit.

11. A fuel cell system for a vehicle, the fuel cell system comprising
- a fuel cell stack arrangement comprising an air inlet side for receiving air to the fuel cell stack arrangement via an air inlet conduit; and
- an energy management system according to any one of the preceding claims, wherein the air compressor is arranged in fluid communication with the air inlet conduit.

12. An electrically propelled vehicle, comprising an energy management system according to any one of claims 1 - 10.

13. A method of controlling an energy management system of a vehicle, the energy management system comprising
- an electric machine electrically connected to an electric source,
- an air compressor arranged in an air flow channel of the energy management system, the air compressor being configured to receive and pressurize air, wherein the air compressor is mechanically connected to, and operable by, the electric machine,
- an air heating arrangement positioned in the air flow channel, wherein the air heating arrangement is arranged to heat air present in the air flow channel, and
- a flow injecting arrangement positioned downstream the air compressor in the air flow channel, wherein the flow injecting arrangement comprises a portion comprising an inlet configured to admit, via a valve, a flow of fluid into the flow of air exhausted from the air compressor, wherein the method comprises:
- determining a temperature level of the air in the air flow channel,
- comparing the temperature level with a predetermined threshold limit, and
- controlling at least one of the air compressor, the air heating arrangement or the valve based on the temperature level.

14. A computer readable medium carrying a computer program comprising program code means for performing the steps of claim 13 when the program means is run on a computer.

15. A computer program comprising program code means for performing the steps of claim 13 when the program is run on a computer.

## Patentansprüche

1. Energiemanagementsystem für ein Fahrzeug, umfassend
- eine elektrische Maschine, die elektrisch mit einer Stromquelle verbunden ist,
- einen Luftkompressor, der in einem Luftströmungskanal des Energiemanagementsystems angeordnet ist, wobei der Luftkompressor konfiguriert ist, um Luft aufzunehmen und unter Druck zu setzen, wobei der Luftkompressor mechanisch mit der elektrischen Maschine verbunden und durch diese betreibbar ist,
- eine Lufterwärmungsanordnung, die in dem Luftströmungskanal in Fluidverbindung mit dem Luftkompressor angeordnet ist, wobei die Lufterwärmungsanordnung angeordnet ist, um in dem Luftströmungskanal vorhandene Luft zu erwärmen, und
- eine nach dem Luftkompressor in dem Luftströmungskanal angeordnete Strömungseinspritzanordnung, wobei die Strömungseinspritzanordnung einen Abschnitt umfasst, der konfiguriert ist, um einen Fluidstrom in den vom Luftkompressor abgegebenen Luftstrom einzulassen.

2. Energiemanagementsystem nach Anspruch 1, wobei die Lufterwärmungsanordnung eine elektrische Lufterwärmungsanordnung umfasst, die nach dem Luftkompressor in dem Luftströmungskanal angeordnet ist.

3. Energiemanagementsystem nach Anspruch 2, wobei die elektrische Lufterwärmungsanordnung elektrisch mit der Stromquelle verbunden ist.

4. Energiemanagementsystem nach einem der vorhergehenden Ansprüche, wobei die elektrische Lufterwärmungsanordnung einen Lufterhitzer umfasst, der in vorgeschalteter Fluidverbindung mit dem Luftkompressor in dem Luftströmungskanal angeordnet ist.

5. Energiemanagementsystem nach einem der vorhergehenden Ansprüche, wobei die Strömungseinspritzanordnung nach der Lufterwärmungsanordnung im Luftströmungskanal angeordnet ist.

6. Energiemanagementsystem nach einem der vorhergehenden Ansprüche, wobei die Strömungseinspritzanordnung eine Venturi-Anordnung ist, die einen verengten Abschnitt umfasst, der einen Einlass aufweist, der konfiguriert ist, um den Fluidstrom in den vom Luftkompressor abgegebenen Luftstrom einzulassen.

7. Energiemanagementsystem nach einem der vorhergehenden Ansprüche, wobei die elektrische Maschine in dem Luftströmungskanal an einer Position vor dem Luftkompressor angeordnet ist.

8. Energiemanagementsystem nach einem der vorhergehenden Ansprüche, wobei das Energiemanagementsystem ferner einen Temperatursensor, der in dem Luftströmungskanal angeordnet ist, und eine Steuereinheit umfasst, die mit dem Temperatursensor verbunden ist, wobei die Steuereinheit eine Steuerschaltung umfasst, die konfiguriert ist, um:
- vom Temperatursensor ein Signal zu empfangen, das ein Temperaturniveau der Luft im Luftströmungskanal anzeigt,
- das Temperaturniveau mit einem vorbestimmten Schwellenwert zu vergleichen, und
- Komponenten des Energiemanagementsystems auf der Grundlage des Temperaturniveaus zu steuern.

9. Energiemanagementsystem nach Anspruch 8, wobei die Steuereinheit mit der elektrischen Maschine verbunden ist und die Steuerschaltung konfiguriert ist, um:
- die elektrische Maschine so zu steuern, dass die Drehzahl des Luftkompressors verringert wird, wenn das Temperaturniveau über dem vorbestimmten Schwellenwert liegt.

10. Energiemanagementsystem nach Anspruch 8 oder 9, wobei die Steuereinheit mit der elektrischen Lufterwärmungsanordnung verbunden ist und die Steuerschaltung konfiguriert ist, um:
- die elektrische Lufterwärmungsanordnung so zu steuern, dass sie in einen aktiven Zustand versetzt wird, um elektrischen Strom von der Stromquelle zu erhalten, wenn das Temperaturniveau unter dem vorbestimmten Schwellenwert liegt.

11. Brennstoffzellensystem für ein Fahrzeug, das Brennstoffzellensystem umfassend
- eine Brennstoffzellenstapelanordnung umfassend eine Lufteinlassseite zur Aufnahme von Luft in die Brennstoffzellenstapelanordnung über eine Lufteinlassleitung; und
- ein Energiemanagementsystem nach einem der vorhergehenden Ansprüche, wobei der Luftkompressor in Fluidverbindung mit der Lufteinlassleitung angeordnet ist.

12. Elektrisch angetriebenes Fahrzeug umfassend ein Energiemanagementsystem nach einem der Ansprüche 1-10.

13. Verfahren zur Steuerung eines Energiemanagementsystem eines Fahrzeugs, das Energiemanagementsystem umfassend
- eine elektrische Maschine, die elektrisch mit einer Stromquelle verbunden ist,
- einen Luftkompressor, der in einem Luftströmungskanal des Energiemanagementsystems angeordnet ist, wobei der Luftkompressor konfiguriert ist, um Luft aufzunehmen und unter Druck zu setzen, wobei der Luftkompressor mechanisch mit der elektrischen Maschine verbunden und durch diese betreibbar ist,
- eine Lufterwärmungsanordnung, die in dem Luftströmungskanal positioniert ist, wobei die Lufterwärmungsanordnung angeordnet ist, um die in dem Luftströmungskanal vorhandene Luft zu erwärmen, und
- eine Strömungseinspritzanordnung, die nach dem Luftkompressor in dem Luftströmungskanal positioniert ist, wobei die Strömungseinspritzanordnung einen Abschnitt umfasst, der einen Einlass umfasst, der konfiguriert ist, um über ein Ventil einen Fluidstrom in den vom Luftkompressor abgegebenen Luftstrom einzulassen, wobei das Verfahren umfasst:
- Bestimmen eines Temperaturniveaus der Luft im Luftströmungskanal,
- Vergleichen des Temperaturniveaus mit einem vorbestimmten Schwellenwert, und
- Steuern des Luftkompressors, der Lufterwärmungsanordnung oder des Ventils auf der Grundlage des Temperaturniveaus.

14. Computerlesbares Medium, das ein Computerprogramm mit Programmcodemitteln zum Durchführen der Schritte nach Anspruch 13 enthält, wenn das Programmmittel auf einem Computer ausgeführt wird.

15. Computerprogramm mit Programmcodemitteln zur Durchführung der Schritte nach Anspruch 13, wenn das Programm auf einem Computer ausgeführt wird.

## Revendications

1. Système de gestion d'énergie pour véhicule, comprenant
- une machine électrique reliée électriquement à une source électrique,
- un compresseur d'air disposé dans un canal d'écoulement d'air du système de gestion de l'énergie, le compresseur d'air étant configuré pour recevoir et comprimer l'air, le compresseur d'air étant mécaniquement relié à la machine électrique et pouvant être actionné par celle-ci,
- un dispositif de chauffage d'air positionné dans le canal d'écoulement d'air en communication fluidique avec le compresseur d'air, le dispositif de chauffage d'air étant agencé pour chauffer l'air présent dans le canal d'écoulement d'air, et
- un dispositif d'injection de flux positionné en aval du compresseur d'air dans le canal d'écoulement d'air, le dispositif d'injection de flux comprenant une section configurée pour admettre un flux de fluide dans le flux d'air évacué du compresseur d'air.

2. Système de gestion d'énergie selon la revendication 1, dans lequel le dispositif de chauffage d'air comprend un dispositif de chauffage d'air électrique positionné en aval du compresseur d'air dans le canal d'écoulement d'air.

3. Système de gestion d'énergie selon la revendication 2, dans lequel dispositif de chauffage d'air électrique est connecté électriquement à la source électrique.

4. Système de gestion d'énergie selon l'une quelconque des revendications précédentes, dans lequel le dispositif de chauffage d'air électrique comprend un réchauffeur d'air positionné en communication fluidique amont avec le compresseur d'air dans le canal d'écoulement d'air.

5. Système de gestion d'énergie selon l'une quelconque des revendications précédentes, dans lequel l'agencement d'injection d'écoulement est positionné en aval du dispositif de chauffage d'air dans le canal d'écoulement d'air.

6. Système de gestion d'énergie selon l'une quelconque des revendications précédentes, dans lequel l'agencement d'injection d'écoulement est un agencement de venturi comprenant une section resserrée comprenant une entrée configurée pour admettre l'écoulement de fluide dans le flux d'air évacué du compresseur d'air.

7. Système de gestion d'énergie selon l'une quelconque des revendications précédentes, dans lequel la machine électrique est agencée dans le canal d'écoulement d'air à une position en amont du compresseur d'air.

8. Système de gestion d'énergie selon l'une quelconque des revendications précédentes, dans lequel le système de gestion d'énergie comprend en outre un capteur de température positionné dans le canal d'écoulement d'air, et une unité de commande connectée au capteur de température, l'unité de commande comprenant un circuit de commande configuré pour :
- recevoir, du capteur de température, un signal indiquant un niveau de température de l'air dans le canal d'écoulement d'air,
- comparer le niveau de température avec une limite seuil prédéterminée, et
- commander les composants du système de gestion de l'énergie en fonction du niveau de température.

9. Système de gestion d'énergie selon la revendication 8, dans lequel l'unité de commande est connectée à la machine électrique, le circuit de commande étant configuré pour :
- contrôler la machine électrique pour réduire une vitesse de rotation du compresseur d'air lorsque le niveau de température est au-dessus de la limite seuil prédéterminée.

10. Système de gestion d'énergie selon la revendication 8 ou 9, dans lequel l'unité de commande est connectée au dispositif de chauffage d'air électrique, le circuit de commande étant configuré pour :
- commander le dispositif électrique de chauffage de l'air pour qu'il se mette dans un état actif afin de recevoir de l'énergie électrique de la source électrique lorsque le niveau de température est inférieur à la limite seuil prédéterminée.

11. Système de pile à combustible pour véhicule, le système de pile à combustible comprenant
- un empilement de piles à combustible comprenant un côté entrée d'air destiné à recevoir l'air vers l'empilement de piles à combustible par l'intermédiaire d'un conduit d'entrée d'air ; et
- un système de gestion d'énergie selon l'une quelconque des revendications précédentes, dans lequel le compresseur d'air est agencé en communication fluidique avec le conduit d'entrée d'air.

12. Véhicule à propulsion électrique, comprenant un système de gestion d'énergie selon l'une quelconque des revendications 1 à 10.

13. Procédé de commande d'un système de gestion d'énergie d'un véhicule, le système de gestion d'énergie comprenant
- une machine électrique reliée électriquement à une source électrique,
- un compresseur d'air disposé dans un canal d'écoulement d'air du système de gestion d'énergie, le compresseur d'air étant configuré pour recevoir et comprimer l'air, le compresseur d'air étant mécaniquement relié à la machine électrique et pouvant être actionné par celle-ci,
- un dispositif de chauffage d'air positionné dans le canal d'écoulement d'air, le dispositif de chauffage d'air étant agencé pour chauffer l'air présent dans le canal d'écoulement d'air, et
- un dispositif d'injection d'écoulement positionné en aval du compresseur d'air dans le canal d'écoulement d'air, le dispositif d'injection d'écoulement comprenant une section comprenant une entrée configurée pour admettre, via une vanne, un flux de fluide dans le flux d'air évacué du compresseur d'air, le procédé comprenant :
- la détermination du niveau de température de l'air dans le canal d'écoulement d'air,
- la comparaison du niveau de température avec une limite seuil prédéterminée, et
- la commande d'au moins un élément parmi le compresseur d'air, le dispositif de chauffage de l'air ou la vanne en fonction du niveau de température.

14. Support lisible par ordinateur comportant un programme informatique comprenant un moyen de code de programme pour exécuter les étapes de la revendication 13 lorsque le moyen de programmation est exécuté sur un ordinateur.

15. Programme informatique comprenant un moyen de code de programme pour exécuter les étapes de la revendication 13 lorsque le programme est exécuté sur un ordinateur.
